# EUROPEAN PATENT APPLICATION

(11) **EP 1 217 632 A1**
(43) Date of publication of application: **26.06.2002**
(21) Application number: 01310524.2
(22) Date of filing: 17.12.2001
(51) Int. Cl.: G21C 19/307, G21C 17/022, C23F 11/18

(54) **Noble metal catalysis for mitigation of corrosion in pressurized water reactor**

(30) Priority: 21.12.2000 US 742893
(71) Applicant: GENERAL ELECTRIC COMPANY, Schenectady, NY 12345 (US)
(72) Inventor: Andresen, Peter Louis, Schenectady, New York 12308 (US); Kim, Young Jin, Clifton Park, New York 12065 (US); Cowan, Robert Lee, II, Livermore, California 94550 (US); Law, Robert James, Livermore, California 94550 (US); Hettiarachchi, Samson, Menlo Park, California 94025 (US)
(74) Representative: Goode, Ian Roy

(57) **Abstract**

Method for controlling erosion and cracking in a metal component of a nuclear reactor, particularly in the highly concentrated primary and secondary systems of a PWR, comprising creating a catalytic surface on the component; and generating a stoichiometric excess of reductant in the water of the reactor to reduce the oxidant concentration at the surface to substantially zero.

## Description

The present invention relates generally to improving resistance to corrosion, erosion-corrosion, and stress corrosion cracking (SCC) in pressurized water reactors (PWR) and related high temperature water environments.

Nuclear reactors are used in central-station electric power generation, research and propulsion. A reactor pressure vessel contains the reactor coolant, i.e. water, which removes heat from the nuclear core. Respective piping circuits carry the heated water or steam to the steam generators or turbines and carry circulated water or feedwater back to the vessel. Operating pressures and temperatures for the reactor pressure vessel are about 7 MPa and 288°C for a boiling water reactor (BWR), and about 15 MPa and 320°C for a pressurized water reactor (PWR). The materials used in both BWRs and PWRs must withstand various loading, environmental and radiation conditions.

Some of the materials exposed to high-temperature water include carbon steel, alloy steel, stainless steel, nickel-based, cobalt-based and zirconium-based alloys. Despite careful selection and treatment of these materials for use in water reactors, corrosion occurs in the materials exposed to the high-temperature water. Such corrosion contributes to a variety of problems, e.g., stress corrosion cracking, crevice corrosion, erosion corrosion, sticking of pressure relief valves and buildup of the gamma radiation-emitting Co-60 isotope.

Stress corrosion cracking (SCC) is a known phenomenon occurring in reactor components, such as structural members, piping, fasteners and welds exposed to high-temperature water. As used herein, SCC refers to cracking propagated by static or dynamic tensile stressing in combination with corrosion at the crack tip. The reactor components are subject to a variety of sources such as residual stress from welding, cold working and other asymmetric metal treatments. In addition, water chemistry, welding, heat treatment, and radiation can increase the susceptibility of metal in a component to SCC.

It is well known that SCC occurs at higher rates when oxygen is present in the reactor water in concentrations of about 5 ppb or greater. SCC is further increased in a high radiation flux where oxidizing species, such as oxygen, hydrogen peroxide, and short-lived radicals, are produced from radiolytic decomposition of the reactor water. Such oxidizing species increase the electrochemical corrosion potential (ECP) of metals. Electrochemical corrosion is caused by a flow of electrons from anodic to cathodic areas on metallic surfaces. The ECP is a measure of the thermodynamic tendency for corrosion phenomena to occur, and is a fundamental parameter in determining rates of, e.g. , SCC, corrosion fatigue, corrosion film thickening, and general corrosion.

In a BWR, the radiolysis of the primary water coolant in the reactor core causes the net decomposition of a small fraction of the water to the chemical products H₂, H₂O₂, O₂ and oxidizing and reducing radicals. For steady-state operating conditions, equilibrium concentrations of O₂, H₂O₂, and H₂ are established in both the water which is recirculated and the steam going to the turbine. This concentration of O₂, H₂O₂, and H₂ is oxidizing and results in conditions that can promote intergranular stress corrosion cracking (IGSCC) of susceptible materials of construction. One method employed to mitigate IGSCC of susceptible material is the application of hydrogen water chemistry (HWC), whereby the oxidizing nature of the BWR environment is modified to a more reducing condition. This effect is achieved by adding hydrogen gas to the reactor feedwater. When the hydrogen reaches the reactor vessel, it reacts with the radiolytically formed oxidizing species to reform water, thereby lowering the concentration of dissolved oxidizing species in the water in the vicinity of metal surfaces. The rate of these recombination reactions is dependent on local radiation fields, water flow rates and other variables.

The injected hydrogen reduces the level of oxidizing species in the water, such as dissolved oxygen, and as a result lowers the ECP of metals in the water. However, factors such as variations in water flow rates and the time or intensity of exposure to neutron or gamma radiation result in the production of oxidizing species at different levels in different reactors. Thus, varying amounts of hydrogen have been required to reduce the level of oxidizing species sufficiently to maintain the ECP below a critical potential required for protection from IGSCC in high-temperature water. As used herein, the term "critical potential" means a corrosion potential at or below a range of values of about -0.230 to -0.300 V based on the standard hydrogen electrode (SHE) scale. IGSCC proceeds at an accelerated rate in systems in which the ECP is above the critical potential, and at substantially lower rates in systems in which the ECP is below the critical potential. Water containing oxidizing species such as oxygen increases the ECP of metals exposed to the water above the critical potential, whereas water with little or no oxidizing species presents results in an ECP below the critical potential.

Corrosion potentials of stainless steels in contact with reactor water containing oxidizing species can be reduced below the critical potential by injection of hydrogen into the water so that the dissolved hydrogen concentration is about 50 to 100 ppb or greater. For adequate feedwater hydrogen addition rates, conditions necessary to inhibit IGSCC can be established in certain locations of the reactor. Different locations in the reactor system require different levels of hydrogen addition. Much higher hydrogen injection levels are necessary to reduce the ECP within the high radiation flux of the reactor core, or when oxidizing cationic impurities, e.g., cupric ion, are present.

An effective approach to achieve this goal is to either coat or alloy the stainless steel surface with palladium or any other platinum group metal. The presence of palladium on the stainless steel surface reduces the hydrogen demand to reach the required IGSCC critical potential of -0.230 V(SHE). The techniques used to date for palladium coating include electroplating, electroless plating (see for example U.S. patents 5,130,080 and 5,130,181 to Niedrach), plasma deposition and related high-vacuum techniques. Palladium alloying has been carried out using standard alloy preparation techniques. Both of these approaches are *ex situ* techniques in that they cannot be practiced while the reactor is in operation.

In nuclear reactors, ECP is increased by higher levels of oxidizing species, e.g., up to 200 ppb or greater of oxygen in the water measured in the circulation piping, from the radiolytic decomposition of water in the core of the nuclear reactor. U.S. Patent No. 5,135,709 describes a method wherein reducing species are provided in the high-temperature water which can combine with the oxidizing species. However, high concentrations of hydrogen, i.e., about 100 ppb or more, are added to the water to provide adequate protection to materials outside the reactor core region, and still higher concentrations are needed to afford protection to materials in the reactor core.

The formation of a catalytic layer of a platinum group metal on an alloy from the aforementioned group catalyzes the recombination of reducing species, such as hydrogen, with oxidizing species, such as oxygen or hydrogen peroxide, that are present in the water of a BWR. Such catalytic action at the surface of the alloy can lower the ECP of the alloy below the critical potential where IGSCC is minimized. As a result, the efficacy of hydrogen additions to high-temperature water in lowering the ECP of components made from the alloy and exposed to the injected water is increased many-fold. Furthermore, it is possible to provide catalytic activity at metal alloy surfaces if the metal substrate of such surfaces contains a catalytic layer of a platinum group metal. Relatively small amounts of the platinum group metal are sufficient to provide the catalytic layer and catalytic activity at the surface of the metal substrate. For example, U.S. Patent No. 5,135,709 teaches that a solute in an alloy of at least about 0.01 wt. %, preferably at least 0.1 wt. %, provides a catalytic layer sufficient to lower the ECP of the alloy below the critical potential. The solute of a platinum group metal can be present up to an amount that does not substantially impair the metallurgical properties, including strength, ductility, and toughness of the alloy. The solute can be provided by methods known in the art, for example by addition to a melt of the alloy or by surface alloying. In addition, a coating of the platinum group metal, or a coating of an alloy comprised of a solute of the platinum group metal as described above, provides a catalytic layer and catalytic activity at the surface of the metal. Suitable coatings can be deposited by methods well known in the art for depositing substantially continuous coatings on metal substrates, such as plasma spraying, flame spraying, chemical vapor deposition, physical vapor deposition processes such as sputtering, welding such as metal inert gas welding, electroless plating, and electrolytic plating.

A need exists to provide improved resistance to corrosion, erosion-corrosion, and stress corrosion cracking (SCC) in pressurized water reactors (PWR) and related high temperature water environments. The present invention seeks to satisfy that need.

The present invention provides a method for controlling erosion and environment cracking in a metal component of a nuclear reactor, particularly in concentrated chemistry environments such as typically exist in a PWR. The method comprises creating a catalytic surface on the component; and generating a stoichiometric excess of reductant in the water of the reactor to reduce the concentration of oxidant at the surface to substantially zero.

The invention will now be described with reference to the accompanying Figures in which:
Figure 1 is a schematic of the dissolved oxygen (or other oxidant) concentration profile in the stagnant boundary layer when a catalytic surface and stoichiometric excess hydrogen are present;
Figure 2 shows the corrosion potential behavior vs. molar ratio of dissolved hydrogen to dissolved oxygen on catalytic and standard (non-catalytic) surfaces;
Figure 3 is a plot of crack length vs. time of sensitized type 304 stainless steel showing the effect of corrosion potential in high purity BWR water;
Figures 4a and 4b are plots of crack length vs. time of sensitized type 304 stainless steel showing the effect of corrosion potential in much higher concentration chemistry environments, e.g. associated with a pH buffered chemistry typical of PWR primary water (2000 ppm B as boric acid with 2 ppm Li as lithium hydroxide);
Figure 5 is a plot of crack length vs. time of sensitized type 304 stainless steel showing the effect of corrosion potential in a non-buffered chemistry containing H₂SO₄ at levels higher than are typically present in BWR's;
Figure 6 is is a plot of crack length vs. time of sensitized type 304 stainless corrosion potential in a non-buffered chemistry containing HCI at levels higher than are typically present in BWR's;
Figure 7 is a plot of crack length vs. time of sensitized type 304 stainless steel showing the effect of corrosion potential in a non-buffered chemistry containing H₃PO₄, which is used in some steam generators at levels higher than are typically present in BWR's;
Figure 8 is is a plot of crack length vs. time of sensitized type 304 stainless steel showing the effect of corrosion potential in a non-buffered chemistry containing HF at levels higher than are typically present in BWR's;
Figure 9 is a plot of potential against pH showing the regions of stability of Fe, Fe ions, and Fe oxides in 300°C water (the hydrogen/water reaction is shown as the dashed line "a");
Figure 10 is a plot showing the difference in erosion―corrosion behavior at 288°C water of carbon steel and of carbon steel coated with Pt/Rh;
Figure 11 is a plot showing the difference in corrosion potential behavior in 288°C water of carbon steel and of carbon steel coated with Pt/Rh.

The present invention resides in the surprising discovery that it is possible, particularly in a concentrated chemistry environment, such as that found in the primary and secondary sytems in a PWR, to control erosion and cracking in a metal component of a nuclear reactor by creating a catalytic surface on the component, and generating a stoichiometric excess of reductant in the water of the reactor in relation to the net oxidant concentration. In effect, at the surface, the oxidant concentration drops to substantially zero and the corrosion potential is dramatically decreased.

As used herein, the term "catalytic surface " means a surface on the component which is sufficient to catalyze the recombination of oxidizing and reducing species at the surface of the component.

As used herein, the term "substantially zero" in relation to the oxidant concentration means no higher than 1 ppb by weight, more usually no higher than 0.1 ppb by weight.

As used herein, the term "dramatically decreased" in relation to the corrosion potential means decreased close to its thermodynamic minimum, i.e. to no higher than 100 mV above the thermodynamic potential for the hydrogen/water reaction at a given pH, temperature and hydrogen concentration.

The method of the invention is not limited to the use of simple oxidants and reductants (e.g., dissolved oxygen and dissolved hydrogen). The invention works with other oxidants (e.g., hydrogen peroxide and copper ion) and other reductants (e.g., hydrazine ammonia, and metal hydrides, for example hydrides of Zr, Hf, V, Nb, Ti, Sc, Y and La).

The catalytic surface may be created by vacuum sputtering, electroplating, electroless plating (see for example U.S. patents 5,130,080 and 5,130,181 to Niedrach), alloying, thermal spraying, plasma deposition and related high-vacuum techniques. More usually, the catalytic surface is created by injecting a solution or suspension of a compound containing a platinum group metal into the water of the reactor.

As used herein, the term "platinum group metal" means metals from the group consisting of platinum, palladium, osmium, ruthenium, iridium, rhodium, and mixtures thereof.

The compound decomposes under prevailing the temperature to release atoms of the metal which deposit onto and incorporate into oxide film present on the surface of the component. The temperature is generally within the range of about to 100° to 650°F., for example within the range of about 300° to 450°F. When the Pt group metal compound solution or suspension enters the high-temperature water, the compound decomposes to produce atoms, which are deposited onto (or incorporated into) the metal (typically stainless steel) oxide film.

As used herein, the term "atoms" means atoms or ions.

In the following discussion, for convenience of description, reference will be made to the use of platinum as a typical noble metal. When mixtures are being considered, platinum and rhodium will be described for ease of reference. It is understood, however, that the invention is not limited to the use of platinum and rhodium, and other platinum group and/or non-platinum group metals may be used alone or as mixtures.

The platinum group are typically introduced into the water as organometallic, organic or inorganic compounds. The compounds may be soluble or insoluble in water (i.e. may form solutions or suspensions in water and/or other media such alcohols and/or acids).

Examples of preferred platinum group metal compounds which may be used are palladium acetyl acetonate, palladium nitrate, palladium acetate, platinum acetyl acetonate, hexahydroxyplatinic acid, Na₂Pt(OH)₆, Pt(NH₃)₄(NO₃)₂, Pt(NH₃)₂(NO₃)₂, K₃Ir(NO₂)₆ and K₃Rh(NO₂)₆. Other examples are platinum(IV) oxide (Pt(IV)O₂), platinum(IV) oxide-hydrate (Pt(IV)O₂.xH₂O, where x is 1-10), rhodium(II) acetate (Rh(II)ac₂), Rh(III) nitrate (Rh(III)(NO₃)₃), rhodium(III) oxide (Rh(III)₂O₃), rhodium(III) oxide-hydrate (Rh(III)₂O₃.xH₂O, where x is 1-10), rhodium(II) phosphate (Rh(III)PO₄) and rhodium(III) sulphate (Rh(III)₂(SO₄)₃).

Examples of mixtures of the compounds which may be used are mixtures containing platinum and iridium, and platinum and rhodium. Use of such mixtures results in incorporation of noble metals on the oxided stainless steel surfaces of both noble metals. The presence of iridium or rhodium with the platinum gives good long-term durability. It has been found that a combination of about 40-80 ppb Pt and 10-35 ppb Rh, for example concentrations of about 60 ppb Pt and about 20 ppb Rh in water, provides good adherent properties over extended periods of time.

The metal compound may be injected *in situ* in the form of an aqueous solution or suspension, or may be dissolved in the water before the metal surface to be treated is introduced. The solution may be prepared for example by dissolving the noble metal compound in ethanol. The ethanol solution is then diluted with water. Alternatively, a water-based suspension can be formed, without using ethanol, by mixing the noble metal compound in water. As used herein, the term "solution" means solution or suspension. Solutions and suspensions may be formed using media well known to those skilled in the art. Examples of suitable media in which solutions and/or suspensions are formed, are water, alkanols such as ethanol, propanol, n-butanol, and acids, such as lower carboxylic acids, e.g. acetic acid, propionic acid and butyric acid.

The metal compound or mixture of metal compounds is generally introduced into the high-temperature water in an amount such that the concentration of the metal(s) in the water is very low, i.e. in the ppb range, but is sufficient such that when present on the metal component, the ECP is lowered below the critical potential required for protection from stress corrosion cracking.

Typically, the metal compound is added in such an amount to produce a metal concentration of no higher than 2000 ppb, for example 0.1 to 1000 ppb, typically 1 to 500 ppb, more usually 5 to 100 ppb.

The compound solution or suspension may be injected into the high-temperature water while the reactor is operating and generating nuclear heat (full power operation), or during cool down, during outage, during heat-up, during hot standby, or during low power operation. The noble metal may be introduced into residual heat removal (RHR) piping, recirculation piping, feedwater line, core delta P line, jet pump instrumentation line, control rod drive cooling water lines, water level control points, or any other location which provides introduction of the noble metal into the reactor water and good mixing with the water.

As used herein, the term "high-temperature water" in the present invention means water having a temperature of about 100°F or greater, steam, or the condensate thereof. High temperature water can be found in a variety of known apparatus, such as water deaerators, nuclear reactors, and steam-driven power plants. The temperature of the water when noble metal is added to the reactor water is typically in the range of 100-650°F, for example 150-450°F, more usually about 340° - 360°F. When the compound is in the high-temperature water, it decomposes and the metal atoms are deposited onto the oxide surface.

At the very low levels of metal(s) introduced into the reactor, the stainless steel oxide surface is not covered completely with metal. Adequate catalysis occurs if the oxide surface has noble metal present in an amount atleast as low as 10% surface area coverage (about 0.1µg/cm²). One monolayer of Pt gives about 1µg/cm². Typically, in a BWR, this level is at about 0.15 to 0.75 µg/cm². The external appearance of the oxided alloy treated according to this approach does not differ from the appearance of untreated stainless steel oxide.

Typically, the pH of the water at ambient temperature is in the region of 6.5 to 7.5, and at higher operating temperatures is lower, generally in the region of about 5.5 - 5.8, for example 5.65. This is due to increased dissociation of the water (giving H and OH ions) at the higher temperatures.

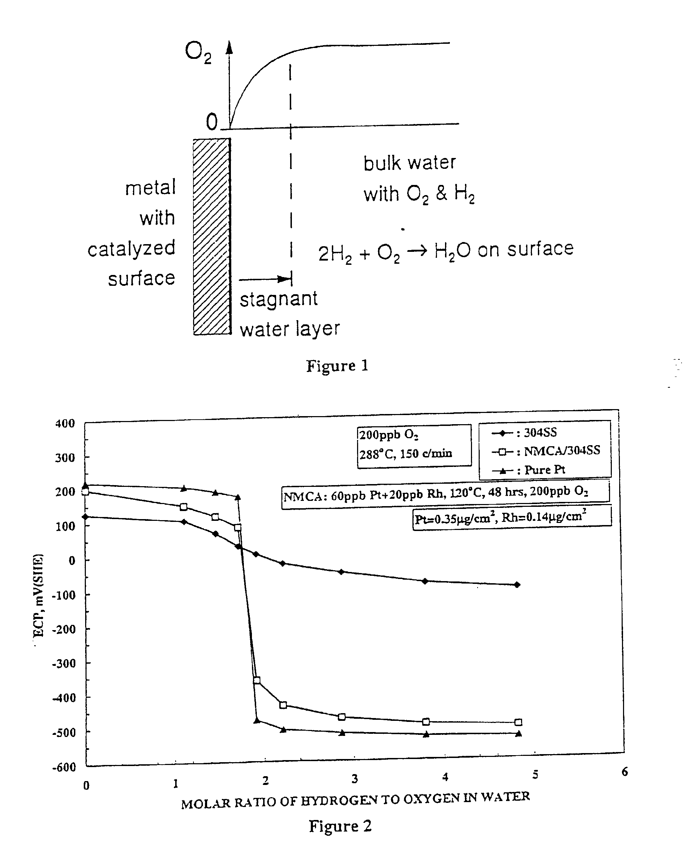

Referring to Figure 1, there is shown a schematic of the dissolved oxygen (or other oxidant) concentration profile in the stagnant boundary layer adjacent to a catalytic surface. When stoichiometric excess reductant (typically dissolved hydrogen) is present in the water, the reaction rate on a catalytic surface between the reductant and oxidant is sufficiently high that all oxidant is consumed at the surface.

Figure 2 shows the corrosion potential behavior vs. molar ratio of dissolved hydrogen to dissolved oxygen. Once stoichiometric excess hydrogen conditions are achieved (molar ratio of 2.0), the corrosion potential drops to its thermodynamic minimum, which is equivalent to its value in deaerated water without any oxidants present which varies with temperature, pH and hydrogen concentration. Typically, the corrosion potential is in the regionof ― 520 mVₛₕₑ undr BWR conditions.

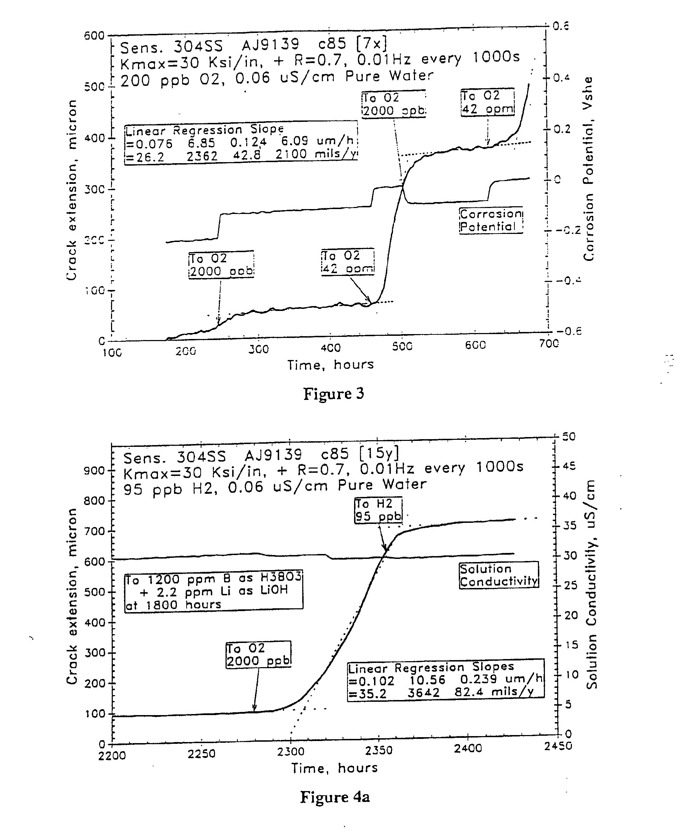

Figure 3 is a plot of crack length vs. time of sensitized type 304 stainless steel showing the effect of corrosion potential in high purity BWR water. This demonstrates that lowering the corrosion potential provides the same benefits in more diverse chemistries and more concentrated solutions that it does in pure water.

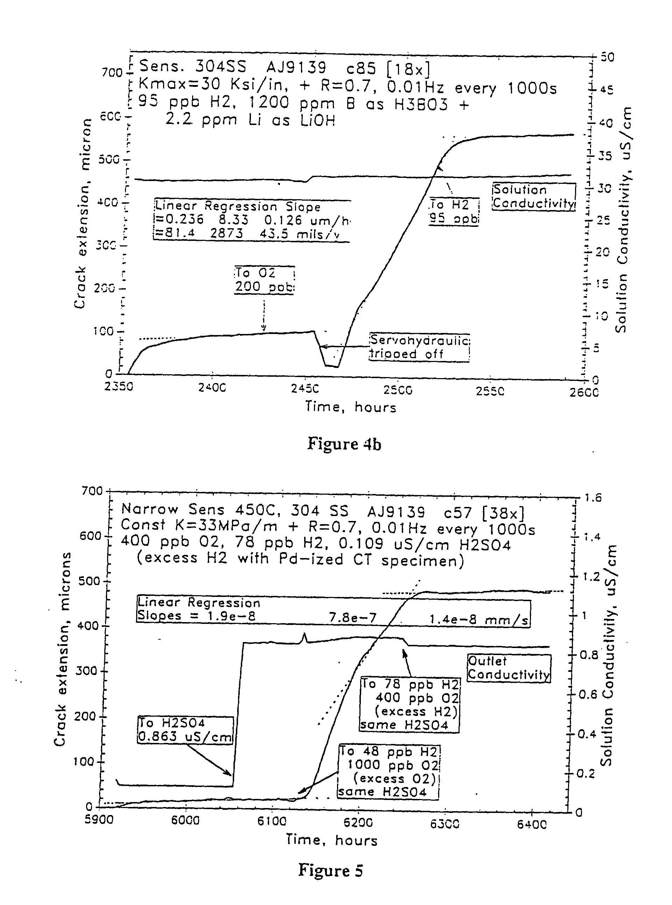

Figure 4 is a plot of crack length vs. time of sensitized type 304 stainless steel showing the effect of corrosion potential in a pH buffered chemistry typical of PWR primary water. In this instance, the buffering is achieved using 2000 ppm B as boric acid with 2 ppm Li as lithium hydroxide, which is the upper end of their concentration in PWR's.

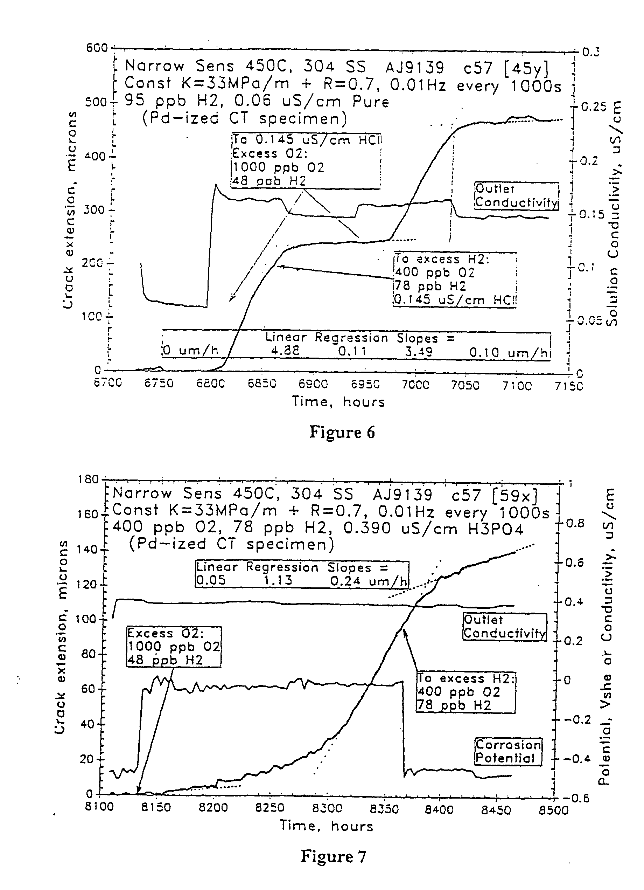

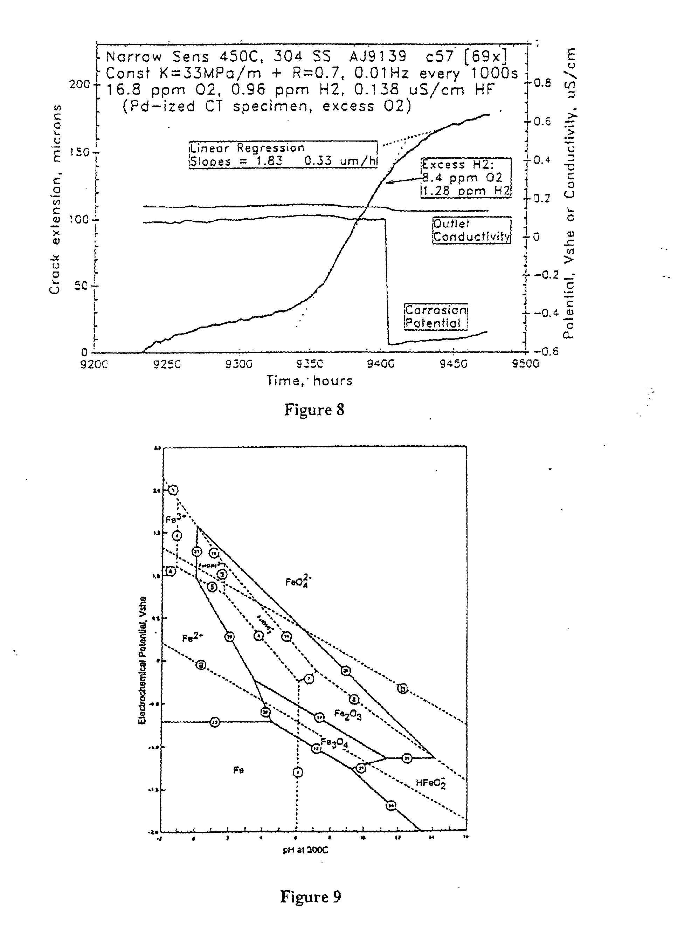

Non-buffered chemistries are demonstrated in Figures 5-8. Figure 5 is a plot of crack length vs. time of sensitized type 304 stainless steel showing the effect of corrosion potential in a non-buffered chemistry containing H₂SO₄ at levels higher than typically found in BWRs. Figure 6 is a plot of crack length vs. time of sensitized type 304 stainless corrosion potential in a non-buffered chemistry containing HCI at levels higher than typically found in BWRs. Figure 7 is a plot of crack length vs. time of sensitized type 304 stainless steel showing the effect of corrosion potential in a non-buffered chemistry containing H₃PO₄, which is used in some steam generators at levels higher than typically found in BWRs. Figure 8 is is a plot of crack length vs. time of sensitized type 304 stainless steel showing the effect of corrosion potential in a non-buffered chemistry containing HF.

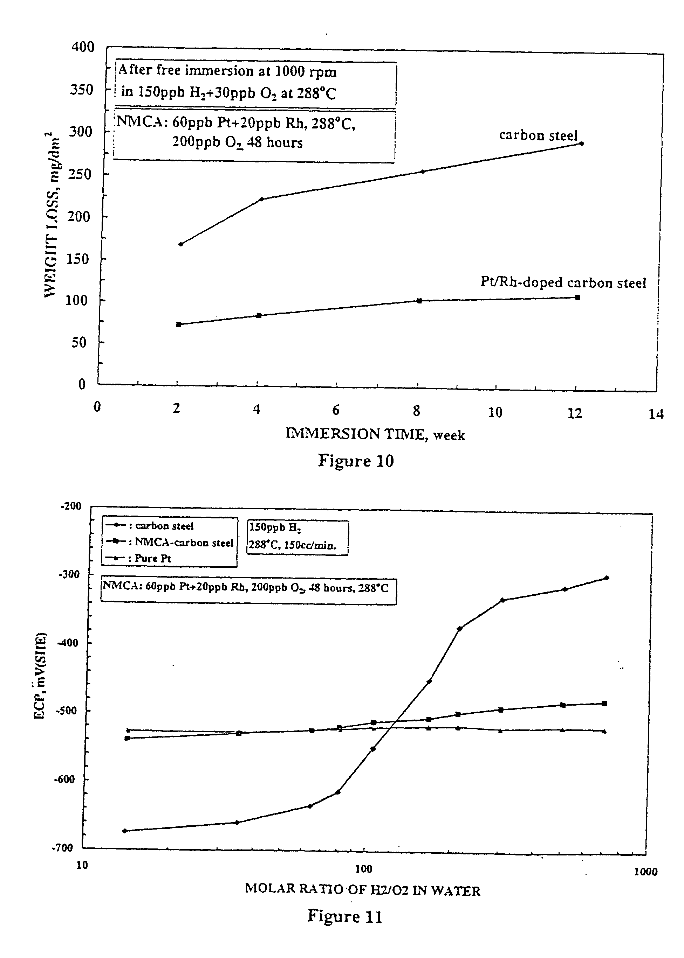

Figure 9 shows a plot of potential against pH showing the regions of stability of Fe, Fe ions, and Fe oxides in 300°C water. The hydrogen/water reaction is shown as the dashed line "a". Figure 10 is a plot showing the difference in erosion-corrosion behavior at 288°C water of carbon steel and of carbon steel coated with Pt/Rh. Figure 11 is a plot showing the difference in corrosion potential behavior in 288°C water of carbon steel and of carbon steel coated with Pt/Rh.

In BWR's, the conductivity of the coolant water must not exceed 0.3 µS/cm (at this level,various actions are initiated to clean the water or shut down the reactor), and more usually is maintained below 0.1 µS/cm. Such conductivity levels are adversely impacted by high concentrations of ionic species (especially Cl and SO₄), and every effort is made to ensure that reactor ionic concentrations are maintained as low as possible, preferably less than 5 ppb, for example 2-3 ppb.

The noble metal-containing compound is injected *in situ* into the high-temperature water at an amount such as to produce, upon decomposition of the compound, a metal concentration of up to 2000 ppb. This level is more usually about 1 to 200 ppb, for example 5 to 50 ppb.

While not likely, it is possible that lowering the potential can make damaging species stable, such as sulfide. In general, for this particular case - which is the most prominent concern noted in the literature, decreasing the potential to the H₂-H₂O line (i.e., the potential for the hydrogen-water reversible reaction), which is accomplished according to the present invention, does not produce damaging quantities of sulfide. Rather, it is usually necessary to suppress the potential further by imposing currents by external instruments or galvanic coupling with less noble metal.

The method of the present invention is particularly adapted for use in systems that are different than BWRs, for example in PWR primary water and secondary feed water. Compared with BWR's, the primary system of commercial PWR's is of the order of 10,000 times more concentrated than a BWR with ionic and other contaminants, and the PWR secondary system is typically of the order of 10,000 times more concentrated with contaminants than the PWR primary system. In most commercial PWR reactors, the primary system contains 10-2500 ppm boron as boric acid and 0.5-2.5 ppm lithium as lithium hydroxide. The secondary system typically contains sodium phosphate and phosphoric acid, as well as moieties such as silicates, sulfates, chlorides, carbonates and acetates. The method of the present invention is also adapted for use in relation concentrated solutions that exist in PWR steam generator crevices, sludge piles, and in geothermal systems.

In many components and locations, a one-time or periodic (e.g., every few years) application of noble metal, e.g. Pt, is sufficient to achieve and maintain a catalytic surface. In locations where there is a large accumulation of corrosion product or other debris, such as the bottom horizontal surface of steam generators (typically the tube sheet), it will generally necessary to provide more regular or continuous treatments, which can be readily accomplished by introducing very low levels of Pt group chemicals, e.g., into the feed water during operation.

Oxidant levels during operation are generally low (e.g. less than 1 ppm). This means that is possible to readly achieve stoichiometric excess reductant conditions, often without any significant change in the types of chemicals added to the system, which almost always includes reductants. For example, hydrazine is generally as effective as hydrogen in recombining with oxidants on catalytic surfaces. Thus, it is usually only necessary to monitor oxidants and adjust reductant levels to maintain the required stoichiometric excess of reductant.

In contrast to stress corrosion cracking, erosion-corrosion is dramatically accelerated on carbon steels exposed to deaerated (or hydrogenated) water. This is because the oxide that forms on carbon steel under these conditions is not highly protective under high flow rate conditions. When the fluid velocity is high, the oxide is readily eroded, and the corrosion potential drops by several hundred millivolts from a potential controlled by the H₂-H₂O reaction to a potential strongly influenced by iron dissolution. It has been found accordign to the invention that the presence of a catalytic surface helps to maintain the typical corrosion potential associated with the H₂-H₂O reaction, where erosion-corrosion rates are very low. The hydrogen-water reaction varies with tempertaure, pH and hydroen concentration and ias typically -520 mVₛₕₑ under BWR operation conditions and about ―650 mVₛₕₑ under PWR primary operating conditions.

### EXAMPLES

The following examples serve to illustrate the present invention.

A variety of tests have been performed in varying and more concentrated chemistries, as discussed earlier and presented in Figures 3-8. The data shown in Figures 3-8 are from specimens identified as c57 and c85.

These tests were performed on sensitized type 304 stainless steel, (heat AJ9 139) which was solution annealed at 1100°C for 1 hour, water quenched, then sensitized at 621°C for 24 hours. Specimen c57 received additional heat treatments at 900°C for 10 hours, then 450°C for 300 hours to refine the grain boundary Cr depletion profile (making it very narrow), so that it represents what forms during neutron irradiation exposure. The chemical composition of the commercial heat AJ9139 is 18.37% Cr, 8.13% Ni, 0.93% Mn, 0.47% Si, 0.25% Mo, 0.028% 5, 0.026% P, 0.048% N, and 0.066% C. After heat treatment, specimens were then machined into a standard 1 inch compact type (1TCT) geometry.

For testing, the specimens were placed in a 4 liter autoclave, instrumented for crack monitoring using reversed d.c. potential drop, pre-cracked, then tested under several loading conditions. During the tests, corrosion potentials were measured against a ZrO₂ / Cu / Cu₂O reference electrode. These experiments were conducted at a temperature of 288°C and a pressure of 1500 psig.

## Claims

1. A method for controlling erosion and cracking in a metal component of a nuclear reactor, comprising the steps of:
creating a catalytic surface on said component; and
generating a stoichiometric excess of reductant in the water of said reactor to reduce the concentration of oxidant at said surface to substantially zero.

2. A method according to claim 1, wherein said catalytic surface is created using a platinum group metal.

3. A method according to claim 2, wherein said platinum group metal is selected from the group consisting of Pt, Pd, Rh, Ru, Re and Ir.

4. A method according to any one of claims 1 to 3, wherein said catalytic surface is created by vacuum sputtering, electroplating, electroless plating, alloying, thermal spraying, or doping.

5. A method according to any one of claims 1 to 4, wherein said nuclear reactor is a PWR.

6. A method according to any one of claims 1 to 5 wherein said reductant is hydrogen and said stoichiometric excess is a molar ratio of hydrogen to oxygen of 2.0.

7. A method according to any one of claims 1 to 6, wherein said reductant is selected from hydrogen, hydrazine and a metal hydride.

8. A method according to claim 7, wherein said metal hydride is selected from Zr, Hf, V, Nb, Ti, Sc, Y and La.
